# EUROPÄISCHE PATENTSCHRIFT

(11) **EP 4 053 502 B1**
(45) Veröffentlichungstag und Bekanntmachung des Hinweises auf die Patenterteilung: **12.11.2025**
(21) Anmeldenummer: 22153297.1
(22) Anmeldetag: 25.01.2022
(51) Int. Cl.: G01C 13/00, G01C 7/00, G01C 21/00, G01F 23/18, G01F 23/00

(54) **VERFAHREN ZUR BESTIMMUNG EINES GEWÄSSERPROFILS**
METHOD FOR DETERMINING A WATERCOURSE PROFILE
PROCÉDÉ DE DÉTERMINATION D'UN PROFIL DES EAUX

(30) Priorität: 27.01.2021 DE 102021101796
(43) Veröffentlichungstag der Anmeldung: 07.09.2022
(73) Patentinhaber: Dirksen, Jens, 26419 Schortens (DE)
(72) Erfinder: Dirksen, Jens, 26419 Schortens (DE)
(74) Vertreter: Jabbusch, Matthias

(56) Entgegenhaltungen:
- CN-B- 109 099 854
- DE-A1- 102016 111 238
- US-A- 5 834 641
- US-A- 5 990 809

## Beschreibung

Die Erfindung betrifft ein Verfahren zur Bestimmung eines Gewässerprofils mit wenigstens einer Messeinheit zum Erfassen von Messdaten, wobei die Messeinheit mittels eines Positioniergeräts auf eine bestimmte Position des Gewässers gebracht wird und mit den Messdaten das Gewässerprofil erstellt wird, wobei mit der Messeinheit zumindest die Tiefe des Gewässers ermittelt wird und aus den Messdaten ein Tiefenprofil des Gewässers erstellt wird.

Das Gewässerprofil stellt einen entscheidenden Faktor beim Angelsport und beim Fischen dar, da dieses Aufschluss darüber geben kann, wo sich Fische in dem Gewässer vermutlich aufhalten. Die Kenntnis des Gewässerprofils kann somit zu höheren Erfolgsaussichten führen. Um jetzt an der richtigen Position zu Angeln oder zu Fischen, ist ein wichtiger Wert des Gewässerprofils die Tiefe des Gewässers. Zur Bestimmung der Tiefe eines Gewässers werden zumeist Echolote eingesetzt, welche häufig in ein Boot oder Schiff integriert sind. Alternativ eignen sich solche Echolote, die als Bojen ausgesetzt oder ausgeworfen werden und an der Oberfläche des Gewässers treibend die Tiefe dieses unterhalb der Boje ermitteln. Da die Bojen jedoch auf dem Gewässer treiben, kann zu diesen keine exakte Position auf dem Gewässer bestimmt werden. Zudem können nur bedingt weitere relevante Parameter erfasst werden.

Aus der CN 109099854 B geht ein System zur Erfassung der Tiefe eines Gewässers hervor, bei dem ein Schwimmkörper und ein Tauchkörper unter anderem mittels Infrarotsensoren und entsprechender Antriebe übereinander positioniert werden sollen und der Tauchkörper über ein an dem Schwimmkörper umgelenktes Seil bis auf eine tiefste Stelle eines Gewässergrundes absinken soll. Die Tiefe soll dann über Markierungen an dem Seil berechnet werden.

Ein alternativer Ansatz ist der US 5,990,809 A zu entnehmen. Diese offenbart einen Tauchwagen, der ferngesteuert über den Boden eines Gewässergrunds fahren soll. Dieser Tauchwagen soll weiterhin einen Mastaufbau aufweisen, der bis oberhalb einer Wasseroberfläche eines zu vermessenden Gewässers reicht. An einer oberen Mastspitze soll dann ein Positionsindikator montiert sein, der entweder in Abhängigkeit von GPS-Daten oder Umgebungsdaten die Berechnung eines hydrographischen Modells des Gewässers ermöglichen soll, wobei insbesondere die Tiefe optisch erfasst werden soll.

Aufgabe der Erfindung ist es, die Nachteile der Bojen zu überwinden und insbesondere für einen Angelsportler eine einfache und kostengünstige Möglichkeit bereitzustellen, das Gewässerprofil in einem bestimmten Bereich eines Gewässers zu ermitteln.

Die Lösung dieser Aufgabe erfolgt verfahrensmäßig mit den Merkmalen des Anspruchs 1. Weiterbildungen und vorteilhafte Ausgestaltungen sind in den nachgeordneten Ansprüchen angegeben.

Das Verfahren zur Bestimmung eines Gewässerprofils mit wenigstens einer Messeinheit zum Erfassen von Messdaten, wobei die Messeinheit mittels eines Positioniergeräts auf eine bestimmte Position des Gewässers gebracht wird und mit den Messdaten das Gewässerprofil erstellt wird, wobei mit der Messeinheit zumindest die Tiefe des Gewässers ermittelt wird und aus den Messdaten ein Tiefenprofil des Gewässers erstellt wird, zeichnet sich erfindungsgemäß dadurch aus, dass die Messeinheit an der Position bis auf einen Gewässergrund absinkt, dass die Messeinheit nach Erreichen des Gewässergrundes über den Gewässergrund geschleift wird und dass die Messdaten beim Bewegen der Messeinheit über dem Gewässergrund erfasst werden.

Die über den Gewässergrund bewegte Messeinheit ermöglicht das Sammeln von Messdaten an unterschiedlichen Positionen in dem Gewässer, wobei die unterschiedlichen Positionen entlang einer vorbestimmten Wegstrecke liegen. Das Gewässerprofil bildet somit zu den erfassten Messdaten ermittelte Werte entlang dieser Wegstrecke ab. Diese Wegstrecke ist durch eine Startposition an der Stelle, an der die Messeinheit auf den Gewässergrund sinkt, und eine Endposition bestimmt, die ausgehend von der Startposition die Position darstellt, an der die letzte Messung erfolgt. Mit Vorteil sind dabei sowohl die Startposition als auch die Endposition frei wählbar und das zu ermittelnde Gewässerprofil entspricht im Wesentlichen einer geraden Linie an der Gewässeroberfläche zwischen der Start- und der Endposition.

Wesentlich für das Verfahren ist dabei, dass die Bestimmung des Gewässerprofils von einem zu dem Gewässergrund unveränderbaren Standort erfolgt, insbesondere einer am Ufer oder in Ufernähe des jeweiligen Gewässers befindlichen Person erfolgt.

Auf einfache Weise wird die Messeinheit mit dem Positioniergerät in Richtung des Positioniergeräts über den Gewässergrund gezogen, insbesondere verkürzt sich der Abstand der Messeinheit zum Positioniergerät beim Ziehen dieser über den Gewässergrund mit zunehmender Wegstrecke. Für das Erfassen der Messdaten werden damit keine zusätzlichen Gerätschaften benötigt. Dies ermöglicht eine relativ kostengünstige Handhabung. Das Positioniergerät kann dabei in weiterer Ausgestaltung dafür ausgelegt sein, die Messeinheit auf die vorbestimmte Position, die den Startpunkt der Erfassung des Gewässerprofils darstellt, auszuwerfen. Eine die Messung zur Erfassung des Gewässerprofils vornehmende Person kann das Positioniergerät mit der Messeinheit dann derart handhaben, dass die Person, insbesondere ein Angler oder dergleichen, ihren Standort für die Durchführung der Messung nicht verändern muss. Die Messeinheit somit an das oder zu dem Positioniergerät herangezogen wird und die Wegstrecke zwischen Auswurfbeziehungsweise Startpunkt und Positioniergerät erfasst beziehungsweise festgehalten wird.

Die Messdaten werden nach einer Weiterbildung in vorbestimmten Zeitabständen aufgenommen. Dadurch ist erreicht, dass der Zeitpunkt, an dem die jeweilige Messung erfolgt, bekannt ist. Für eine korrekte Erfassung der Messdaten muss die Messeinheit damit nur noch eine bestimmte Wegstrecke innerhalb der Zeitspanne zwischen zwei Messungen zurücklegen. Einerseits wird durch die bestimmte Wegstrecke innerhalb der Zeitspanne eine gleichmäßige Verteilung der einzelnen Messungen über die Länge der Wegstrecke sichergestellt und andererseits vereinfacht dies die Zuordnung einer Messung zu einer bestimmten Position entlang der Wegstrecke.

Alternativ zu den in vorbestimmten Zeitabständen aufgenommenen Messdaten, können diese in einer Abwandlung des Verfahrens auch in individuell festzulegenden Zeitabständen erfasst werden. Individuell bedeutet dabei, dass jede Messung beziehungsweise Aufnahme einer Messdate einzeln ausgelöst oder von einer ausführenden Person einzeln bestätigt werden muss. Ausgelöst beziehungsweise betätigt bezieht sich dabei auf den Zeitpunkt, dem eine relevante Messdate oder Messung zugeordnet werden soll. Jede Messung wird somit einzeln festgehalten, wobei die ausführende Person nicht an zeitliche Vorgaben gebunden ist. Um zu den individuell festgelegten Zeitabständen dann jeweils auch einen Messwert zuordnen zu können, kann weiter vorgesehen sein, dass über die Dauer der Messdatenaufnahme jeweils mehr als eine Messung je Sekunde erfolgt, insbesondere 4-5 Messungen je Sekunde erfolgen. Auch ist es möglich, weniger Messungen durchzuführen als eine je Sekunde oder genau eine Messung pro Sekunde. Die Messzeitpunkte der Messeinheit werden dann vorteilhafterweise angezeigt, insbesondere optisch oder akustisch. Ein Benutzer kann dann bei Anzeige der Messung einen entsprechenden Zeitstempel festlegen, mit dem eine relevante Messung definiert wird. Die aufgenommenen Daten werden dann bei Auswertung dieser mit den individuell festgelegten Zeitabständen zusammengeführt.

Um die Position einer Messung exakt ermitteln zu können, ist daher weiterhin vorgesehen, dass den Zeitabständen eine zu definierende Wegstrecke zugeordnet wird. Neben dem Zeitpunkt der Messung ist so auch die Position der Messung festgelegt. Auf einfache Weise kann dies dadurch erfolgen, dass die Wegstrecke über Wickelumdrehungen einer Schnur des Positioniergeräts ermittelt wird, an der die Messeinheit während der Bestimmung des Gewässerprofils angehängt ist. Die Wickelumdrehungen sind unmittelbar abhängig von einem Umfang eines Wickels, auf den die Schnur aufgewickelt wird. Eine Wickelumdrehung hat damit eine Länge gleich dem Umfang des Wickels, wobei die Länge der Wegstrecke entspricht, die die Messeinheit über den Gewässergrund bewegt wurde. Bei der Ermittlung und Auswertung der Messdaten muss dann entsprechend der Umfang des Wickels berücksichtigt werden.

Die Auswertung und Wiedergabe der Messdaten beziehungsweise des Gewässerprofils erfolgt vorteilhafterweise mit einem Auswerte- und Anzeigeprogramm, mit dem die von der Messeinheit erfassten Messdaten verarbeitet werden können. Dieses Auswerte- und Anzeigeprogramm wird nach einer Weiterbildung vor der Bestimmung des Gewässerprofils mit der Messeinheit synchronisiert. Mit der Synchronisation ist sichergestellt, dass die Messeinheit und das Auswerte- und Anzeigeprogramm Zeitgleichheit aufweisen und die erfassten Messdaten von dem Auswerte- und Anzeigeprogramm korrekt wiedergegeben werden.

Die Synchronisation von der Messeinheit mit dem Auswerte- und Anzeigeprogramm umfasst dabei vorteilhafterweise alle für die Messung relevanten Parameter. Relevante Parameter sind insbesondere die Startposition der Wegstrecke, die Endposition der Wegstrecke, die Zeitabstände in denen Messdaten aufgenommen werden sollen, sowie die Wegstrecke, welche zwischen zwei Messungen zurückgelegt werden soll. Ein wichtiger Parameter für die Bestimmung der Wegstrecke ist beispielsweise der Umfang des Wickels. Die zum Erfassen von Messdaten nötigen Einstellungen können nach einer Weiterbildung über das Auswerte- und Anzeigeprogramm eingegeben werden, insbesondere ein- und ausgegeben werden, insbesondere ein- und ausgegeben und verarbeitet werden. Die Synchronisation erfolgt dann nach Eingabe der Parameter.

Weiter ist vorgesehen, dass der Zeitpunkt einer Messung bei der Erfassung der Messdaten von dem Auswerte- und Anzeigeprogramm beziehungsweise einer Funktionseinheit, auf dem das Auswerte- und Anzeigeprogramm ausgeführt wird, angezeigt wird, insbesondere akustisch angezeigt wird. Dies ermöglicht der die Messung durchführenden Person auf einfache Weise die Messeinheit in den vorgesehenen Zeitabständen entlang der Wegstrecke über den Gewässergrund zu bewegen. Der Zeitpunkt einer Messung ist in weiterer Ausgestaltung als der Zeitpunkt definiert, an dem die jeweilige Messung abgeschlossen ist.

Bei der alternativen Erfassung kann eine entsprechende Anzeigeoption des Zeitpunkts der vorgegebenen Messung entfallen, da die Zeit bzw. der Zeitabstand durch die unmittelbare Eingabe des zu messenden Zeitpunkts in den Auswerte- und Anzeigeprogrammen festgelegt ist und nicht anderweitig vorgegeben sein kann.

Die durch Bewegen der Messeinheit über dem Gewässergrund gesammelten Messdaten werden nach einer nächsten Weiterbildung, insbesondere mittels einer NFC-Schnittstelle, von dem Auswerte- und Anzeigeprogramm ausgelesen, verarbeitet und für einen Nutzer aufbereitet. Dies bezieht sich insbesondere auch auf die Speicherung von bereits erstellten Gewässerprofilen, welche zu einem späteren Zeitpunkt aufgerufen werden können, so dass eine Messung an einem Standort jeweils nur einmal durchgeführt werden muss. Wiederholungen sind dann nur erforderlich, wenn mit starken Veränderungen des Gewässergrundes oder anderer interessanter Parameter zu rechnen ist. Die NFC-Schnittstelle stellt dabei eine technisch einfache Möglichkeit dar, die Messdaten kontaktlos von der Messeinheit zu dem Auswerte- und Anzeigeprogramm zu übertragen, wodurch eine wasserdichte Konstruktion der Messeinheit begünstigt ist.

Alternativ zu der NFC-Schnittstelle eignen sich aber auch andere Übertragungsverfahren. Insbesondere können auch solche Übertragungsverfahren für die Messdaten vorgesehen werden, bei denen die Messdaten unmittelbar nach deren Erfassung zu dem Auswerte- und Anzeigeprogramm gesendet werden. Die Verarbeitung und die Erfassung der Messdaten mit der Messeinheit erfolgen dann mit Vorteil zeitgleich. Das Gewässerprofil kann dann direkt berechnet und einem Nutzer angezeigt werden. Die das Verfahren nutzende Person kann dann gegebenenfalls noch während der Durchführung der Messung Veränderungen an den Parametern vornehmen.

Von besonderem Interesse bei der Erstellung eines Gewässerprofils ist zumeist die Tiefe des jeweiligen Gewässers. Mit der Messeinheit wird daher nach einer Weiterbildung die Tiefe des Gewässers ermittelt und aus den Messdaten ein Tiefenprofil des Gewässers erstellt. Dieses Tiefenprofil kann beispielsweise Aufschluss darüber geben, an welchen Positionen der Wegstrecke sich bevorzugte Aufenthaltsorte von Fischen befinden dürften. Ein Angler, der das Verfahren nutzt, kann dann seine Angelrute auf die entsprechende Position auswerfen und hat eine größere Chance auf einen erfolgreichen Fang.

Neben der Tiefe des jeweiligen Gewässers können noch weitere Faktoren von Interesse sein. Alternativ oder in weiterer Ausgestaltung ist daher vorgesehen, dass mit der Messeinheit wenigstens einer der nachfolgend genannten Parameter Temperatur, Sauerstoff- oder Nitratgehalt, als Messdaten erfasst und in das Gewässerprofil einbezogen werden. Möglich ist dabei sowohl die einzelne Erfassung eines jeden Parameters als auch eine Messeinheit, die mehrere oder alle der Parameter zeitgleich aufnimmt.

Weiter betrifft die Erfindung auch eine Vorrichtung zur Bestimmung eines Gewässerprofils, insbesondere nach dem vorgenannten Verfahren, mit wenigstens einer Messeinheit zum Erfassen von Messdaten, wobei die Messeinheit mit einem Positioniergerät verbunden ist. Diese Vorrichtung zeichnet sich dadurch aus, dass die Messeinheit wenigstens eine Kommunikationsschnittstelle und wenigstens eine Energieversorgung aufweist, die zusammen mit wenigstens einem Sensor der Messeinheit in einer wasserdichten Umhüllung aufgenommen sind, dass die Messeinheit wenigstens einen Drucksensor aufweist, und dass die Messeinheit ein Mindestgewicht aufweist, das diese auf einen Gewässergrund sinken lässt. Die Kombination aus Messeinheit und Positioniergerät gewährleistet, dass die Messeinheit nach dem Absinken auf den Gewässergrund mit dem Positioniergerät gehandhabt werden kann und über den Gewässergrund gezogen werden kann. Durch das Ziehen der Messeinheit über den Gewässergrund kann die Messeinheit entlang einer bestimmten Wegstrecke bewegt werden, so dass zu einem bestimmten Abschnitt des Gewässers das Gewässerprofil ermittelt wird.

Das Mindestgewicht der Messeinheit kann dabei einerseits durch die notwenigen Komponenten der Messeinheit oder ein in diese integriertes Gewicht, insbesondere vergossenes Gewicht, erreicht werden. Andererseits kann eine Beschwerung der Messeinheit auch durch handelsübliche Gewichte, insbesondere aus dem Angelbedarf, erfolgen. Bei Verwendung von diesen handelsüblichen Gewichten ist dann eine Öse oder dergleichen an der Messeinheit auszubilden, an die entsprechende Gewichte anhängbar sind.

Nach einer Weiterbildung ist der Messeinheit ein Auswerte- und Anzeigeprogramm der Vorrichtung zugeordnet, welches bevorzugt drahtlos über die Kommunikationsschnittstelle der Messeinheit mit dieser Daten austauschen kann. Der drahtlose Austausch von Daten ermöglicht auf einfache Weise den Aufbau der wasserdichten Umhüllung der Messeinheit, da keine Anschlüsse zum Datenaustausch vorgesehen werden müssen. Durch die Verbindung der Messeinheit mit einem Auswerte- und Anzeigeprogramm kann zudem auf eine Anzeigeeinrichtung an der Messeinheit verzichtet werden, wodurch ein kompakter und kostengünstiger Aufbau der Messeinheit ermöglicht ist.

Ein geeigneter Standard für die Kommunikationsschnittstelle kann in weiterer Ausgestaltung eine NFC-Schnittstelle sein. Es sei jedoch darauf hingewiesen, dass auch andere Standards zur Datenübertragung, insbesondere noch zu entwickelnde Standards zur Datenübertragung, von der Erfindung umfasst sind, die eine drahtlose oder auch drahtgebundene Übertragung der Messdaten ermöglichen.

Das Auswerte- und Anzeigeprogramm ist nach einer Weiterbildung auf einer Funktionseinheit installierbar und ausführbar, die über eine geeignete Kommunikationsschnittstelle zur Kommunikation mit der Messeinheit und Mittel zur Verarbeitung und Wiedergabe der Messdaten verfügt. Bevorzugt wird die Funktionseinheit durch ein tragbares, prozessorgesteuertes und/oder ein Bildschirm aufweisendes Gerät gebildet, wie beispielsweise ein Smartphone, ein Tablet, ein Notebook oder dergleichen, auf dem das Auswerte- und Anzeigeprogramm als Software beziehungsweise App installiert ist.

Weiter zeichnen sich die Messeinheit und das Auswerte- und Anzeigeprogramm vorteilhafterweise dadurch aus, dass diese für die Erfassung von Messdaten miteinander synchronisierbar sind, insbesondere zeitlich synchronisierbar sind. Messungenauigkeiten, insbesondere auf einem zeitlichen Versatz zwischen der Messeinheit und dem Auswerte- und Anzeigeprogramm beruhenden Messungenauigkeiten, ist damit effektiv entgegengewirkt.

Um in der Messeinheit ablaufende Prozesse zu organisieren, ist weiterhin vorgesehen, dass diese wenigstens einen Mikrocontroller aufweist. Der Mikrocontroller stellt dann die Verbindung zwischen der NFC-Schnittstelle und einem oder mehreren Sensoren der Messeinheit dar, mit denen die Messdaten erfasst werden. Weiter kann der Mikrocontroller die erfassten Messdaten zwischenspeichern und steuert die zuvor synchronisierten Zeitpunkte der Messungen.

Für die Prozesse in der Messeinheit weist diese nach einer Weiterbildung eine eigene Energieversorgung auf. Hierzu kann in die Umhüllung ein Akkumulator oder eine Batterie als Energieversorger eingebaut sein. Bei Verwendung eines Akkumulators können an der Messeinheit zudem Anschlüsse zum Laden des Akkumulators vorgesehen sein. Zudem kann ein Fach für den Akkumulator oder die Batterie öffenbar sein, um diese auszutauschen. Zugunsten einer möglichst einfachen und kostengünstig gestalteten wasserdichten Umhüllung kann die Energieversorgung allerdings auch fest verbaut sein. Dies ist insbesondere dadurch möglich, dass die Komponenten der Messeinheit einen nur geringen Energiebedarf haben und zumeist nur kurzzeitig in Gebrauch sind. Um den Energiebedarf zu senken, kann zudem ein Taster beziehungsweise ein Ein-/Ausschalter an der Messeinheit vorgesehen sein.

Das Positioniergerät weist in weiterer Ausgestaltung wenigstens einen Wickel für eine Schnur auf, wobei Wickelumdrehungen des Wickels äquivalent zu einer bestimmten Wegstrecke der Schnur sind und die Messeinheit an einem dem Wickel entgegengesetzten Ende der Schnur an dieser befestigt ist. Insbesondere kann das Positioniergerät eine Angelrute oder dergleichen sein. Über den bekannten Umfang des Wickels lässt sich dann ohne weitere Hilfsmittel die Wegstrecke berechnen, die die Messeinheit beim Erfassen der Messdaten über dem Gewässergrund zurücklegt.

Das Positioniergerät befindet sich dabei nach einer Weiterbildung für die Dauer der Erfassung des Gewässerprofils an einem bestimmten zu dem zu erfassenden Gewässer unveränderlichen Position, insbesondere ist diese Position eine am Ufer oder in Ufernähe befindliche Person mit dem Positioniergerät, wobei der Standpunkt der Person den Bezugspunkt bildet, auf den die zu erfassenden Messdaten bezogen sind. Die Messeinheit ist somit mit dem Positioniergerät entlang der Wegstrecke den Abstand zum Positioniergerät verkürzend bewegbar.

Indem die Umhüllung der Messeinheit eine strömungsgünstige Form aufweist, ist zudem erreicht, dass diese möglichst einfach über den Gewässergrund gezogen wird. Einem Hängenbleiben an sich am Gewässergrund befindlichen Pflanzen ist so optimal entgegengewirkt. Bevorzugt ist die strömungsgünstige Form eine Tropfenform, wobei deren Schwerpunkt vorteilhafterweise an der dem Positioniergerät oder der Verbindung zu dem Positioniergerät entgegengesetzten Ende ausgebildet ist.

Weiter kann sich die Messeinheit dadurch auszeichnen, dass diese aufgrund ihrer Form, ihrem Gewicht und/oder ihrer Abmessungen mit dem Positioniergerät, insbesondere einer Angelrute, mehr als 100 m, insbesondere mehr als 150 m, weit ausgeworfen werden kann.

Die Messeinheit weist nach einer nächsten Weiterbildung wenigstens einen Drucksensor auf, mit dem die Gewässertiefe ermittelbar ist. Das Gewässerprofil ist dann zumindest ein Tiefenprofil des Gewässers, wobei die Gewässertiefe Aufschluss darüber geben kann, wo sich Fische bevorzugt aufhalten. Der Drucksensor kann in weiterer Ausgestaltung derart in die Messeinheit integriert sein, dass die Umhüllung zumindest abschnittsweise durch eine Membran, insbesondere eine Gel-basierte Membran, des Drucksensors gebildet ist.

Weitere, insbesondere für das Angeln relevante, Parameter können beispielsweise mit einem Temperatursensor, einem Sauerstoffsensor oder einem Nitratsensor ermittelt werden. Die Vorrichtung kann demnach einen einzelnen oder eine Kombination der vorgenannten Sensoren aufweisen, je nachdem, welche Daten als Messdaten erfasst werden sollen. Allen Sensoren und zu erfassenden Daten gemein ist dabei, dass diese unmittelbar an der Position ermittelt werden, zu der die Messdaten benötigt werden.

Ein Ausführungsbeispiel der Erfindung, aus dem sich weitere erfindungswesentliche Merkmale ergeben können, ist in der Zeichnung dargestellt. Gleiche Teile sind dabei in allen Figuren mit gleichen Bezugszeichen versehen. Es zeigen:

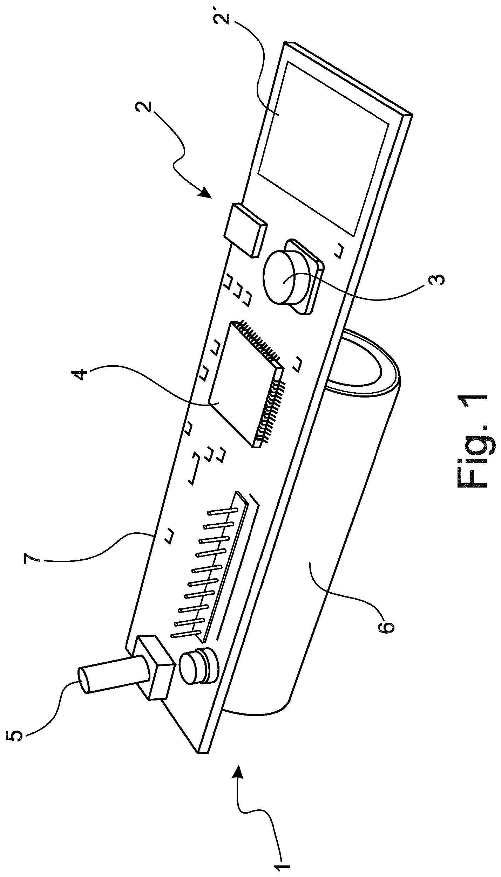

- Figur 1:: eine perspektivische Ansicht einer Messeinheit ohne deren Umhüllung; und
- Figur 2:: eine schematische Darstellung einer Abfolge des Verfahrens anhand eines erfindungsgemäßen Auswerte- und Anzeigeprogramms unterteilt in die einzelnen Darstellungen 2a bis 2e einer Benutzeroberfläche.

Aus der perspektivischen Darstellung, die eine Messeinheit 1 ohne deren Umhüllung zeigt, sind die einzelnen innerhalb der Umhüllung anzuordnenden Komponenten ersichtlich. Im Einzelnen sind dies eine Kommunikationsschnittstelle 2 gebildet durch eine Antenne 2' mit NFC-Standard, ein Drucksensor 3, ein Mikrocontroller 4, ein Ein-/Ausschalter 5 und eine Energieversorgung 6. Diese Komponenten sind alle auf einer Platine 7 angeordnet und entsprechend miteinander verschaltet, so dass die von dem Drucksensor 3 ermittelten Messdaten über die Kommunikationsschnittstelle 2 und die Antenne 2' an ein Auswerte- und Anzeigeprogramm übermittelt werden können. Gesteuert werden die notwendigen Prozesse mit dem Mikrocontroller 4.

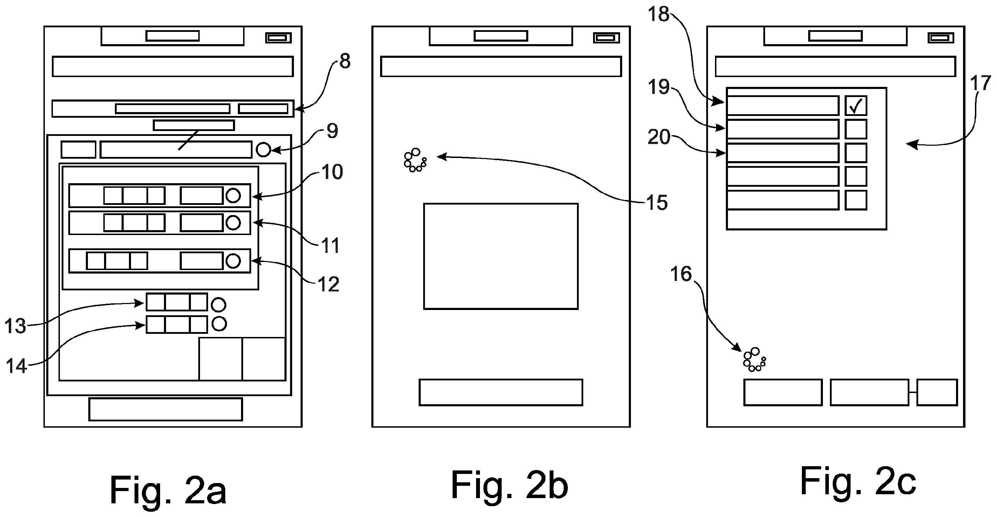

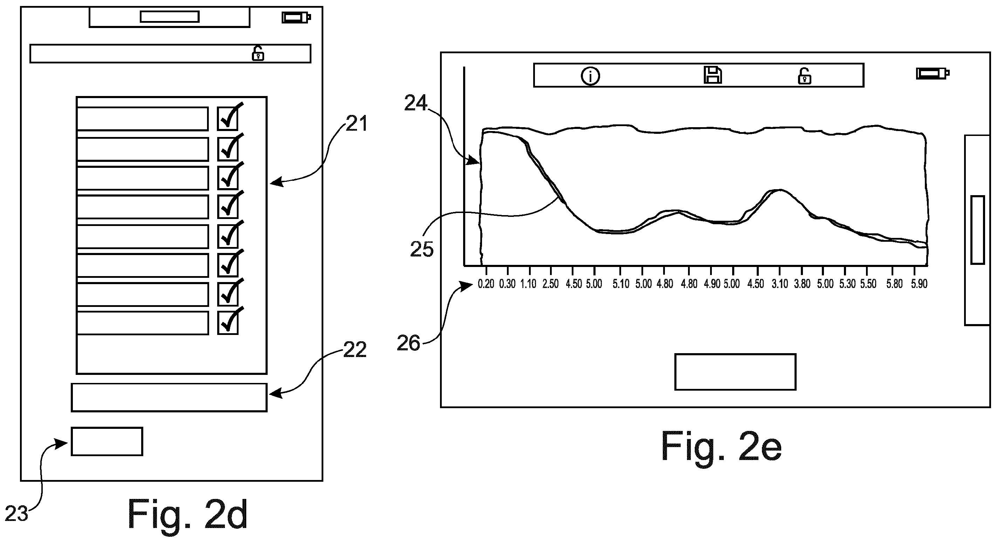

Dieses Auswerte- und Anzeigeprogramm ist in den folgenden Darstellungen der Figur 2 aufgezeigt. Die Figur 2 gliedert sich dabei in einzelne Darstellungen 2a bis 2e einer Benutzeroberfläche des Auswerte- und Anzeigeprogramms. Das Auswerte- und Anzeigeprogramm wird auf einer entsprechenden Funktionseinheit mit Anzeigefläche, Kommunikationsschnittstelle 2 zur Kommunikation mit der Messeinheit 1 und einer Möglichkeit Befehle einzugeben ausgeführt. Nicht in Figur 2 dargestellt ist eine nach einem Öffnen des Auswerte- und Anzeigeprogramms erscheinende Benutzeroberfläche, welchen einen Nutzer zur Registrierung beziehungsweise zum Login in das Auswerte- und Anzeigeprogramm auffordert.

In dem Auswerte- und Anzeigeprogramm können dann verschiedene beispielhaft in der Figur 2a aufgezeigte Einstellungen vorgenommen werden. Diese ermöglichen in Feld 8 die Auswahl oder Eingabe des Gewässers, zu dem das Gewässerprofil erstellt werden soll und in Feld 9 die Eingabe eines für die Messung zu verwendenden Wickels. Alternativ zu der Festlegung eines bestimmten Wickels kann eine Wickelumdrehung auch als eine bestimmte Wegstrecke festgelegt werden. Die Eingabe einer Startposition einer Wegstrecke des Gewässerprofils erfolgt in Feld 10 und die einer geplanten Endposition der Wegstrecke in Feld 11. Weiter wird in Feld 12 die Schrittweite, das heißt der Abstand zwischen zwei Messungen entlang der Wegstrecke festgelegt. Die Wegstrecke ist dabei in Feld 10 bis 12 über Wickelumdrehungen definiert, wobei sich die mit einer Wickelumdrehung verbundene Wegstrecke aus Feld 8 ergibt. Schließlich werden die Zeiten für die Messungen, das heißt der Zeitpunkt der ersten Messung nach Start einer Messreihe in Feld 13 und der Zeitabstand zwischen den folgenden Messungen in Feld 14, jeweils in Sekunden, bestimmt.

In nachgeordneten, über das Hauptmenü erreichbaren, Untermenüs, welche nicht dargestellt sind, können dann weitere Einstellungen vorgenommen werden. So können beispielsweise unterschiedlich große Wickel gespeichert werden oder optional Fotos beziehungsweise Karten zu einem jeweiligen Gewässer hinterlegt werden oder ob in Süßwasser oder Salzwasser gemessen wird.

Die Bestimmung des Gewässerprofils selbst erfolgt dann in einem nächsten Menü, wobei nach Anklicken dieses auf der Benutzeroberfläche entsprechend Figur 2b angezeigt wird, sich vorzubereiten und ein Countdown 15 entsprechend der eingegebenen Zeit bis zur ersten Messung runter läuft. Die weiteren Messungen werden dann in einer nächsten Benutzeroberfläche gemäß Figur 2c angezeigt, wobei wiederum ein Countdown 16 bis zur nächsten Messung angegeben wird. Die Benutzeroberfläche gemäß Figur 2c zeigt zudem eine Übersicht 17 der getätigten Messungen 18, der nächsten Messung 19 und der noch folgenden Messungen 20.

Schließlich wird nach Durchführung der Messreihe entsprechend Darstellung 2 eine Übersicht 21 aller Messungen gegeben und in Feld 22 aufgefordert, die Messeinheit 1 auszulesen. Dies erfolgt, indem die Messdaten von der Messeinheit 1 über die Kommunikationsschnittstelle 2 auf das Auswerte- und Anzeigeprogramm übertragen werden. Bei dem Verdacht auf eine fehlerhafte Messreihe oder bei einer vorzeitigen Beendigung kann alternativ in Feld 23 auch ein Abbruch der Erstellung des Gewässerprofils erfolgen. Nach Übertragung wird dann ein erstelltes Gewässerprofil 24 entsprechend Figur 2e in einem Diagramm dargestellt. In dem gezeigten Beispiel ist dies ein Tiefenprofil des Gewässers. Das Diagramm des Gewässerprofils 24 enthält in dem Beispiel eine grafische Darstellung des Gewässergrundes 25 als Linie. Dieser Linie sind unterhalb des Diagramms Positionsdaten 26 der Wegstrecke in Form einer Entfernung in Metern und der zugehörigen Wickelumdrehungen zugeordnet.

Dieses Gewässerprofil 24 kann abschließend gespeichert und für weitere Angelausflüge mit dem Auswerte- und Anzeigeprogramm wieder aufgerufen werden.

Alle in der vorstehenden Beschreibung und in den Ansprüchen genannten Merkmale sind in einer beliebigen Auswahl mit den Merkmalen der unabhängigen Ansprüche kombinierbar. Die Offenbarung der Erfindung ist somit nicht auf die beschriebenen Merkmalskombinationen beschränkt, vielmehr sind alle im Rahmen der Erfindung sinnvollen Merkmalskombinationen als offenbart zu betrachten.

## Patentansprüche

1. Verfahren zur Bestimmung eines Gewässerprofils (24) mit wenigstens einer Messeinheit (1) zum Erfassen von Messdaten, wobei die Messeinheit (1) mittels eines Positioniergeräts auf eine bestimmte Position des Gewässers gebracht wird und mit den Messdaten das Gewässerprofil (24) erstellt wird, wobei mit der Messeinheit (1) zumindest die Tiefe des Gewässers ermittelt wird und aus den Messdaten ein Tiefenprofil des Gewässers erstellt wird,
**dadurch gekennzeichnet,**
**dass** die Messeinheit (1) an der Position bis auf einen Gewässergrund (25) absinkt,
**dass** die Messeinheit (1) nach Erreichen des Gewässergrundes (25) über diesen geschleift wird und
**dass** die Messdaten beim Bewegen der Messeinheit (1) über dem Gewässergrund (25) erfasst werden.

2. Verfahren nach Anspruch 1, **dadurch gekennzeichnet, dass** die Messeinheit (1) mit dem Positioniergerät in Richtung des Positioniergeräts über den Gewässergrund (25) gezogen wird, insbesondere sich der Abstand der Messeinheit (1) zum Positioniergerät beim Ziehen dieser über den Gewässergrund (25) mit zunehmender Wegstrecke verkürzt.

3. Verfahren nach einem der Ansprüche 1 oder 2, **dadurch gekennzeichnet, dass** die Messdaten in vorbestimmten Zeitabständen aufgenommen werden oder dass die Messdaten in individuell festzulegenden Zeitabständen erfasst werden.

4. Verfahren nach einem der Ansprüche 2 oder 3, **dadurch gekennzeichnet, dass** den Zeitabständen eine zu definierende Wegstrecke zugeordnet wird.

5. Verfahren nach einem der Ansprüche 2 bis 4, **dadurch gekennzeichnet, dass** die Wegstrecke über Wickelumdrehungen einer Schnur des Positioniergeräts ermittelt wird, an der die Messeinheit (1) während der Bestimmung des Gewässerprofils (24) angehängt ist.

6. Verfahren nach einem der Ansprüche 1 bis 5, **dadurch gekennzeichnet, dass** die Messeinheit (1) vor der Bestimmung des Gewässerprofils (24) mit einem Auswerte- und Anzeigeprogramm synchronisiert wird.

7. Verfahren nach Anspruch 6, **dadurch gekennzeichnet, dass** zum Erfassen von Messdaten nötige Einstellungen über das Auswerte- und Anzeigeprogramm eingegeben werden, insbesondere ein- und ausgegeben werden, insbesondere ein- und ausgegeben und verarbeitet werden.

8. Verfahren nach einem der Ansprüche 6 oder 7, **dadurch gekennzeichnet, dass** der Zeitpunkt einer Messung (18, 19, 20) bei der Erfassung der Messdaten von dem Auswerte- und Anzeigeprogramm beziehungsweise einer Funktionseinheit, auf dem das Auswerte- und Anzeigeprogramm ausgeführt wird, angezeigt wird, insbesondere akustisch angezeigt wird.

9. Verfahren nach einem der Ansprüche 1 bis 8, **dadurch gekennzeichnet, dass** mit der Messeinheit (1) wenigstens einer der nachfolgend genannten Parameter, Temperatur, Sauerstoffgehalt oder Nitratwert, als Messdaten erfasst und in das Gewässerprofil (24) einbezogen werden.

## Claims

1. A method for determining a watercourse profile (24) with at least one measuring unit (1) for acquiring measurement data, wherein the measuring unit (1) is moved to a certain position of the watercourse by means of a positioning device and the watercourse profile (24) is generated with the measurement data, wherein at least the depth of the watercourse is determined with the measuring unit (1) and a depth profile of the watercourse is generated from the measurement data,
**characterized in**
**that** the measuring unit (1) sinks at the position until it reaches a watercourse bed (25),
**that** the measuring unit (1) is dragged over the watercourse bed (25) after reaching the watercourse bed, and
**that** the measurement data is acquired during the movement of the measuring unit (1) over the watercourse bed (25).

2. The method according to claim 1, **characterized in that** the measuring unit (1) is pulled over the watercourse bed (25) in the direction of the positioning device with the positioning device, particularly such that the distance of the measuring unit (1) from the positioning device is reduced with increasing distance while the measuring unit is pulled over the watercourse bed (25).

3. The method according to one of claims 1 or 2, **characterized in that** the measurement data is recorded in predetermined time intervals or that the measurement data is acquired in time intervals to be defined individually.

4. The method according to one of claims 2 or 3, **characterized in that** a distance to be defined is assigned to the time intervals.

5. The method according to one of claims 2 to 4, **characterized in that** the distance is determined based on coil turns of a cord of the positioning device, to which the measuring unit (1) is attached during the determination of the watercourse profile (24).

6. The method according to one of claims 1 to 5, **characterized in that** the measuring unit (1) is synchronized with an evaluation and display program prior to the determination of the watercourse profile (24) .

7. The method according to claim 6, **characterized in that** adjustments required for the acquisition of measurement data are input, particularly input and output, especially input and output and processed, by means of the evaluation and display program.

8. The method according to one of claims 6 or 7, **characterized in that** the point in time of a measurement (18, 19, 20) is indicated, particularly indicated acoustically, by the evaluation and display program or by a functional unit, on which the evaluation and display program is executed, during the acquisition of the measurement data.

9. The method according to one of claims 1 to 8, **characterized in that** at least one of the parameters temperature, oxygen content or nitrate value is acquired as measurement data with the measuring unit (1) and incorporated into the watercourse profile (24).

## Revendications

1. Procédé de détermination d'un profil des eaux (24) avec au moins une unité de mesure (1) pour saisir des données de mesure, sachant que l'unité de mesure (1) est placée au moyen d'un appareil de positionnement à un certaine position des eaux et le profil des eaux (24) est établi avec les données de mesure, sachant qu'au moins la profondeur des eaux est déterminée avec l'unité de mesure (1) et un profil de profondeur des eaux est établi à partir des données de mesure,
**caractérisé en ce que**
l'unité de mesure (1) descend à la position jusqu'à un fond des eaux (25),
**en ce que** l'unité de mesure (1) est traînée sur celui-ci après avoir atteint le fond des eaux (25) et
**en ce que** les données de mesure sont saisies sur le fond des eaux (25) lors du déplacement de l'unité de mesure (1).

2. Procédé selon la revendication 1, **caractérisé en ce que** l'unité de mesure (1) est tirée avec l'appareil de positionnement en direction de l'appareil de positionnement sur le fond des eaux (25), la distance de l'unité de mesure (1) par rapport à l'appareil de positionnement se réduit en particulier en tirant celui-ci sur le fond des eaux (25) avec un parcours croissant.

3. Procédé selon l'une quelconque des revendications 1 ou 2, **caractérisé en ce que** les données de mesure sont enregistrées à des intervalles de temps prédéterminés ou **en ce que** les données de mesure sont saisies dans des intervalles de temps à fixer individuellement.

4. Procédé selon l'une quelconque des revendications 2 ou 3, **caractérisé en ce qu'**un parcours à définir est attribué aux intervalles de temps.

5. Procédé selon l'une quelconque des revendications 2 à 4, **caractérisé en ce que** le parcours est déterminé par les tours d'enroulement d'un cordon de l'appareil de positionnement auquel l'unité de mesure (1) est suspendue pendant la détermination du profil des eaux (24) .

6. Procédé selon l'une quelconque des revendications 1 à 5, **caractérisé en ce que** l'unité de mesure (1) est synchronisée avec un programme d'évaluation et d'affichage avant la détermination du profil des eaux (24) .

7. Procédé selon la revendication 6, **caractérisé en ce que** des réglages nécessaires pour la saisie des données de mesure sont introduits, sont en particulier introduits et sortis, sont en particulier introduits, sortis et traités, par le biais du programme d'évaluation et d'affichage.

8. Procédé selon l'une quelconque des revendications 6 ou 7, **caractérisée en ce que** le moment d'une mesure (18, 19, 20) auquel le programme d'évaluation et d'affichage est exécuté, lors de la saisie des données de mesure, est affiché, en particulier est affiché de manière acoustique, par le programme d'évaluation et d'affichage ou bien une unité fonctionnelle.

9. Procédé selon l'une quelconque des revendications 1 à 8, **caractérisé en ce qu'**au moins un des paramètres désignés ci-après : température, teneur en oxygène ou valeur en nitrate, sont saisis avec l'unité de mesure (1) en tant que données de mesure et sont inclus dans le profil des eaux (24).
